# EUROPEAN PATENT SPECIFICATION

(11) **EP 0 721 549 B1**
(45) Date of publication and mention of the grant of the patent: **14.01.1998**
(21) Application number: 94928456.6
(22) Date of filing: 04.10.1994
(51) Int. Cl.: F16H 57/02, F16H 1/16

(54) **WORM SHAFT BEARING ARRANGEMENT**
LAGERUNG EINER SCHNECKENWELLE
AGENCEMENT DE PALIER DE TRANSMISSION A VIS SANS FIN

(30) Priority: 05.10.1993 GB 9320488
(43) Date of publication of application: 17.07.1996
(73) Proprietor: OPPERMAN MASTERGEAR LIMITED, Newbury, Berks RG14 5TS (GB)
(72) Inventor: HARVEY, Raymond, Godfrey, Ashley, HIghclere Newbury Berks RG15 9PW (GB)
(74) Representative: Woodward, John Calvin
(86) International application number: GB9402153
(87) International publication number: WO9509995

(56) References cited:
- DE-A- 3 322 863
- NL-A- 8 700 651
- US-A- 3 316 034

## Description

This invention relates to a worm gearbox used mainly but not exclusively for valve actuators and more particularly to the worm shaft bearing arrangement therein.

In known worm and wheel gearboxes, the worm shaft normally has a portion which protrudes laterally from the gearbox casing through a circular aperture in the casing wall with a bearing bush therein. The other end of the shaft is located in a bearing cavity formed in the casing so the shaft is supported in bearings at two locations on either side of the worm drive where it meshes with the gear wheel.

To assemble a worm gearbox of this type, the tubular bush first has to be fitted in the circular hole in the casing sidewall and the worm shaft can then be fed through this bush into the casing. Once inside, the thrust washers and worm can be mounted on the shaft and the free end of the shaft is then pushed into the end bearing cavity formed in the casing. It will be appreciated that this assembly process is very labour intensive and requires considerable skill to do it.

The problem to be solved by the present invention is to design the worm gearbox in such a way that it is cheaper to manufacture, easier to assemble and thereby requires a lesser degree of labour skill for assembly.

A worm gearbox is known which comprises a one-piece casing closed by a cover, the casing housing a gearwheel mounted therein for rotation about a first axis, a worm shaft meshing with the gear wheel and being mounted in bearing assemblies for rotation about a second axis at 90° to the first axis, a portion of said worm shaft protruding from one side of the casing through a circular side aperture therein.

A worm gear box comprising the features of the first part of claim 1 is known from US-A-33 16 034.

The present invention as defined by the features of claim 1 provides an improvement over the prior art by forming the casing in one-piece with each bearing assembly comprising a bush which is wholly received in the casing and located therein so that all the radial and axial worm shaft loads are carried by the one-piece casing, the side aperture in the casing being open on one side and the cover retaining all the components in the casing when fitted thereto.

The side aperture in the casing being open on one side is an important feature of the invention as it allows a sub-assembly including the worm shaft with the bearing assemblies fitted thereto to be inserted into the casing in a direction at 90° to the axis of rotation of the worm shaft. Conveniently the side aperture is substantially square in cross section. With this side aperture configuration, it will be appreciated that it is no longer necessary to feed the worm shaft laterally through the side aperture in the casing wall for assembly purposes as it can instead be lowered into the casing which substantially simplifies the assembly process.

Preferably each bearing bush is wholly received in a respective bearing cavity in the casing. In the preferred embodiment, the casing has a base with a rebate formed therein shaped to receive and locate one end of each bearing bush. Preferably each bearing bush comprises a body with an aperture therethrough to receive the worm shaft, said body having rounded ends and a plane bottom which fits into said rebate in the base and is located thereby.

In the preferred embodiment, the casing includes rounded shoulder portions which cooperate with the rounded ends of each bearing bush body to take any radial and axial loads generated, in use, by the worm shaft.

Preferably the rounded shoulder portions on the casing and the rebate in the base thereof are formed by machining the casing in a direction at 90° to the axis of rotation of the worm shaft. In the preferred embodiment, a pair of rounded shoulders are provided on the casing at one side only of each rebate formed therein.

Preferably each rebate is oval when viewed in plan and of the same shape as the cross section of the body of the bearing bush but very slightly larger so that the bearing bush is a sliding fit therein.

An oil seal is preferably fitted to the worm shaft and received in said side aperture to make an oil tight seal therewith.

In the preferred embodiment, the gear wheel is a quadrant with teeth around the arcuate perimeter thereof but the wheel could be circular with teeth extending some or all of the way round its periphery.

The worm gear box of the type specified comprising the assembling steps of mounting the bearing assemblies, thrust bearings and an oil seal on the worm shaft to form a sub-assembly, lowering said sub-assembly into the casing in a direction at 90° to the axis of rotation of the worm shaft and fitting the cover plate to the casing to retain all the components therein.

It is a further feature of the present invention that the one-piece casing has cavities formed therein which are machined in the casing in one direction only to receive and locate the bearing assemblies therein. Forming the bearing locating cavities in this way substantially cuts down the manufacturing time and therefore costs because it means that any machining of the casing only needs to be done in one direction whereas in the prior art, machining had to be done in several directions involving separate machining operations. Using sintered metal bearing bushes to support the worm shaft is also an important feature of the preferred embodiment of the invention because again it reduces the amount of machining required. It also means that rounded bearing surfaces can be provided on the body of the bearing assemblies which can cooperate with corresponding easily machined rounded bearing surfaces provided on the casing.

A preferred worm gearbox of the present invention and method of assembly thereof will now be described, by way of example only, with reference to the accompanying drawings, in which:
Figure 1 is a perspective view of a worm gearbox of the present invention;
Figure 2 is a partial cross section of the worm gearbox shown in Figure 1;
Figure 3 is a top plan view of the one-piece casing of the worm gearbox shown in Figures 1 and 2; and
Figure 4 is a partial cross section of the worm gearbox shown in Figures 1 and 2.

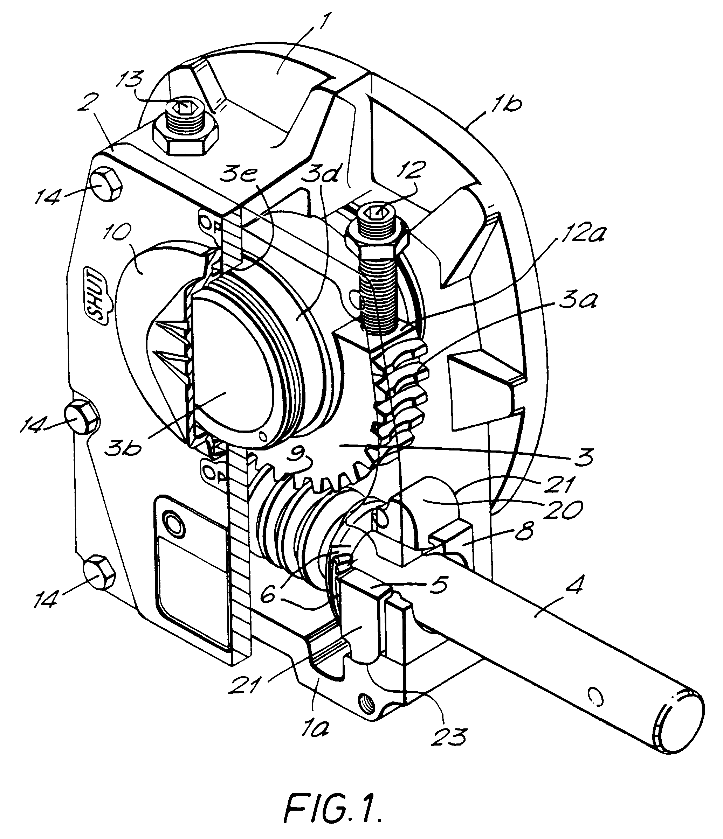

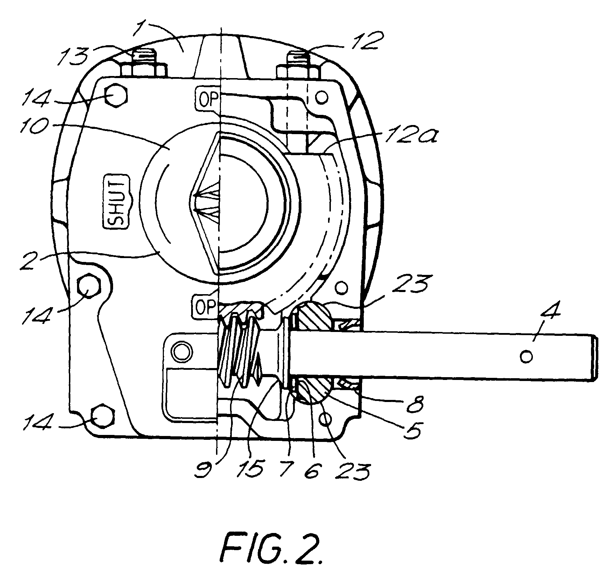

Referring to the drawings and particularly to Figures 1 and 2, there is shown a worm gearbox of the present invention which is intended for use as a valve actuator. It could however be used as an industrial gearbox in applications such as conveyor systems, pumps, mixers, lifting equipment etc.

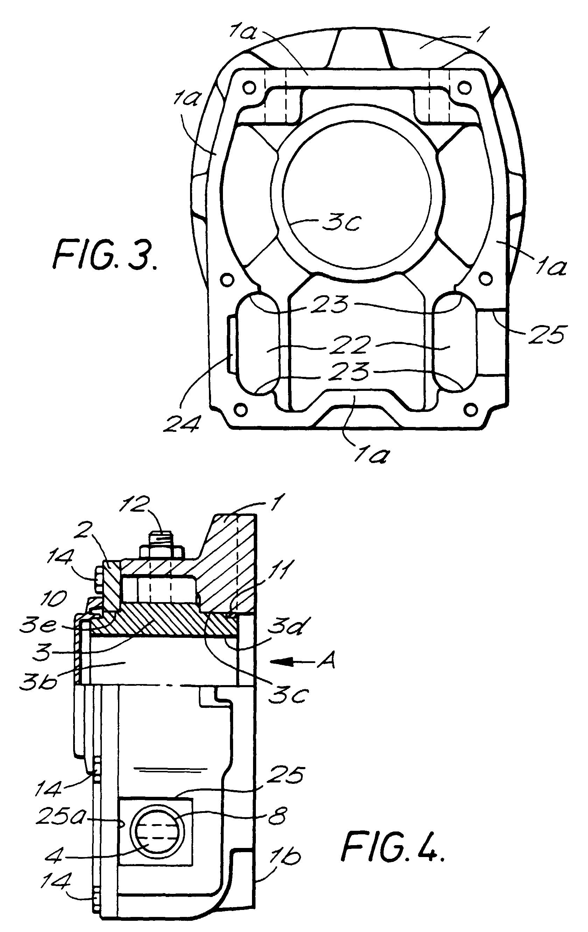

The gearbox comprises a one-piece casing 1 in which a gear wheel 3 is mounted for rotation about a first axis. The illustrated gear wheel 3 is formed as a quadrant and is provided with teeth 3a around its perimeter. The gear wheel is formed with flat ends which cooperates with stop screws 12,13 fitted into the casing 1 (only one flat end 12a is visible in Figures 1 and 2). The gear wheel 3 includes a hub portion 3d protruding laterally from each side thereof (only one such portion is visible in Figure 1) which is mounted in known manner for rotation about a first axis in bearing apertures 3c and 3e provided respectively in the casing 1 (see Figure 3) and cover plate 2 (see Figure 1). The hub portions 3d and the gear wheel 3 have an axial bore 3b extending through them which receives in the direction of arrow A the actuator shaft of an appliance such as the stem or spindle of a valve (not shown). An end cap 10 is a press fit on the end of the hubs 3d protruding from aperture 3e in the cover plate 2 and rotates therewith. It can however be attached in other ways. An O-ring oil seal 11 is provided between the gear wheel 3 and the casing 1 (see Figure 4). An O-ring oil seal (not shown) can also optionally be fitted between the hub 3d and the indicator cap 10.

A worm shaft 4 with a worm gear 9 thereon is fitted in the casing 1. A handwheel (not shown) can be fitted to the end of the shaft 4 protruding from the casing 1 or it can be connected to some other means for rotation. The worm 9 meshes with the teeth 3a on the quadrant gear 3. The shaft 4 is formed with a shoulder 15 adjacent both ends of the worm 9 for reasons which will be explained shortly.

The casing is provided with an aperture or opening 25 at one side thereof which is square in cross section as can be seen from Figures 1 and 4. It will be noted from Figure 4 that the opening 25 is not wholly enclosed by the side wall of the casing 1 but instead has an open side 25a which is closed by the cover plate 2 after assembly on the casing 1 for reasons which will be explained. An oil seal 8 located in the opening 25 in known manner.

The worm shaft 4 is mounted in a pair of bearing bush assemblies 5 (only one is visible in Figures 1 and 2). Each bearing bush assembly has a central hole in it which receives the shaft 4. The body of the bush has rounded, preferably semi-circular, ends 20 and flat or plane upper and lower surfaces 21. These bearing bushes 5 are made of a sintered metal material.

The casing 1 has a perimeter wall la in which the side opening 25 is formed. It also includes oval shaped rebates 22 in the base thereof which, by way of example, are approximately 3mm in depth. These rebates 22 receive the flat bottom 21 of each bearing bush 5 and locates it therein. The side wall la of the casing wall is also formed with arcuate bearing surfaces 23 which are quadrant shaped as shown in Figure 3 and cooperate with the rounded ends 20 of the bearing bushes 5 whereby all radial and axial loads generated by the shaft 4 are carried by the casing 1.

A thrust bearing 7 is sandwiched between a pair of thrust washers 6 located between each annular shoulder 15 on the worm shaft 4 and its adjacent bearing bush 5 (only one such assembly is illustrated in Figures 1 and 2 - the other assembly is identical and a mirror image of the illustrated assembly).

In order to assemble the worm gearbox illustrated in the drawings, a sub-assembly is first made up comprising worm shaft 4 on which a first thrust washer 6 is mounted to abut the right hand shoulder 15. A thrust bearing 7 and a second thrust washer 6 are then mounted on the shaft 4 followed by the bearing bush 5 and the oil seal 8. A second thrust bearing 7 sandwiched between a pair of thrust washers 6 is then fitted on the front left hand end of the shaft (not visible in Figures 1 and 2) to abut the shoulder 15 adjacent the front left hand end of the shaft 4. The sub-assembly is now ready for insertion into the casing 1.

Conveniently, the thrust bearings 7 are needle bearings but other thrust bearings can be used.

Because the side aperture 25 is open on one side, it will be appreciated that the bearing bushes 5 forming part of the whole sub-assembly can be lowered into the casing 1 so that the bottoms 21 fit into and are located in the rebates 23, the rounded ends 20 of the bushes 5 locating against bearing surfaces 23 formed in the casing 1. The oil seal 8 fits into the aperture 25. The cover plate 2 can then be fitted to the casing 1 and secured thereto by means of the bolts 14 thereby retaining the bearing bushes 5, the oil seal 8 and all the other components in position in the casing as well.

Because of the particularly novel construction of the casing of the present invention, it will be appreciated that once the worm shaft 4, two bearing bushes 5, two thrust bearings 7 and associated pairs of thrust washers 6 and oil seal 8 have been assembled into a sub-assembly, this can then be readily slid into the casing 1. Thus, the time consuming prior art process is avoided of having to feed the worm shaft 4 laterally through a circular aperture in the casing side wall and then having to fit all the various components to the shaft before locating its free end in a cavity in the facing casing wall.

Because of the novel construction of the casing of the invention, it will be appreciated that the machining operations needed to form the bearing surfaces 23 in the casing can be carried out only in one direction, i.e. at 90° to the axis of rotation of the worm shaft 4. This can be done in a simple milling operation. Because the bearing bushes 5 are made of a sintered metal material, they can be moulded to provide the cooperating rounded bearing surfaces 20. As a result, the manufacturing process is substantially simplified as is the assembly of the worm gearbox because all the machining steps in the manufacturing process of the casing are done in one direction and the assembly can take place by simply dropping the sub-assembly into the casing and holding it in place with the cover 2.

If the worm gearbox of the invention is to be used, for instance, to operate a quarter-turn valve, face 1b of casing 1 is bolted to the valve housing (not shown) with the valve spindle (not shown) received in the bore 3b and drivingly keyed thereto. Thus, when shaft 4 is rotated, e.g. using a handwheel (not shown) connected thereto, the worm 9 rotates the gear wheel 3 and the valve spindle (not shown) drivingly connected thereto to open or close the valve.

## Claims

1. A worm gearbox comprising a casing (1) closed by a cover (2), the casing housing a gearwheel (3) mounted therein for rotation about a first axis, a worm shaft (4) having a worm gear (9) meshing with the gearwheel (3) and mounted in bearing assemblies (5) for rotation about a second axis at 90 degrees to the first axis and having a portion protruding from one side of the casing through a side aperture (8) therein, each bearing assembly (5) comprising a bush which is wholly received in the casing and located therein so that all the radial and axial worm shaft loads are carried by the casing, **characterised in that** each bearing assembly (5) is made of a sintered metal material and is immovably retained in the casing (1) by the direct engagement thereof by the cover (2), the cover forming a part of the casing (1).

2. A worm gearbox as claimed in claim 1 characterised in that the side aperture (8) is shaped to allow a sub-assembly including the worm shaft (4) with the bearing assemblies (5) fitted thereto to be inserted into the casing (1) in a direction at 90 degrees to the axis of rotation of the worm shaft (4).

3. A worm gearbox as claimed in claim 1 or claim 2 characterised in that each bearing bush (5) is wholly received in a respective bearing cavity in the casing (1).

4. A worm gearbox as claimed in claim 3 characterised in that the casing has a base with a rebate (22) formed therein shaped to receive and locate one end (21) of the bearing bush (5).

5. A worm gearbox as claimed in claim 4 characterised in that the bearing bush (5) comprises a body with an aperture therein to receive the worm shaft (4), said body having rounded ends (20) and a plane bottom which fits into said rebate (22) in the base and is located thereby.

6. A worm gearbox as claimed in claim 5 characterised in that the casing (1) includes rounded shoulder portions (23) which cooperate with the rounded ends (20) of each bearing bush body (5).

7. A worm gearbox as claimed in claim 6 characterised in that a pair of rounded shoulders (23) are provided at one side only of each rebate (22) formed in the casing (1).

8. A worm gearbox as claimed in any preceding claim characterised in that the side aperture (8) is substantially square in cross section.

9. A worm gearbox as claimed in any of claims 4-6 characterised in that the rebate is oval when viewed in plan and of the same shape as the body of the bearing bush.

10. A worm gearbox as claimed in claim 8 characterised in that an oil seal is fitted to the worm shaft (4) and received in said side aperture (8) to make an oil tight seal therewith.

11. A worm gearbox as claimed in any preceding claim characterised in that the gearwheel (3) is a quadrant with teeth around the arcuate perimeter thereof.

12. A one-piece casing for a worm gearbox as claimed in claim 1 characterised in that each bearing assembly (5) is received in a cavity in the casing (1) machined therein in one direction only to receive and locate the bearing assemblies (5) therein.

## Patentansprüche

1. Schneckengetriebe, das ein durch eine Abdeckung (2) verschlossenes Gehäuse (1) umfaßt, wobei das Gehäuse ein Getrieberad (3), das darin zur Drehung um eine erste Achse gelagert ist, sowie eine Schneckenwelle (4) enthält, die einen Schneckengang (9) aufweist, der mit dem Getrieberad (3) in Eingriff ist, und in Lageranordnungen (5) zur Drehung um eine zweite Achse mit 90° zur ersten Achse montiert ist und einen Teil aufweist, der aus einer Seite des Gehäuses durch eine darin befindliche seitliche Öffnung (8) herausragt, wobei jede Lageranordnung (5) eine Buchse umfaßt, die gänzlich in dem Gehäuse aufgenommen und so darin gehalten ist, daß alle radialen und axialen Lasten der Schneckenwelle von dem Gehäuse aufgenommen werden, **dadurch gekennzeichnet,** daß jede Lageranordnung (5) aus einem gesinterten Metallmaterial besteht und durch direkten Eingriff mit der Abdeckung (2) unverrückbar in dem Gehäuse (1) gehalten ist, wobei die Abdeckung einen Teil des Gehäuses (1) bildet.

2. Schneckengetriebe nach Anspruch 1, dadurch gekennzeichnet, daß die seitliche Öffnung (8) so gestaltet ist, daß eine vormontierte Baugruppe, welche die Schneckenwelle (4) mit den daran befestigten Lageranordnungen (5) umfaßt, in einer 90°-Richtung zur Drehachse der Schneckenwelle (4) in das Gehäuse (1) eingesetzt werden kann.

3. Schneckengetriebe nach Anspruch 1 oder Anspruch 2, dadurch gekennzeichnet, daß jede Lagerbuchse (5) gänzlich in einer jeweiligen Lagerhöhlung in dem Gehäuse (1) aufgenommen wird.

4. Schneckengetriebe nach Anspruch 3, dadurch gekennzeichnet, daß das Gehäuse eine Basis mit einer darin ausgebildeten Ausnehmung (22) aufweist, die zur Aufnahme und zur Halterung eines Endes (21) der Lagerbuchse (5) geformt ist.

5. Schneckengetriebe nach Anspruch 4, dadurch gekennzeichnet, daß die Lagerbuchse (5) einen Körper mit einer darin befindlichen Öffnung zur Aufnahme der Schneckenwelle (4) umfaßt, wobei dieser Körper abgerundete Enden (20) und eine ebene Unterseite aufweist, die in die Ausnehmung (22) in der Basis paßt und dadurch am Platz gehalten wird.

6. Schneckengetriebe nach Anspruch 5, dadurch gekennzeichnet, daß das Gehäuse (1) abgerundete Schulterbereiche (23) aufweist, die mit den abgerundeten Enden (20) jedes Lagerbuchsenkörpers (5) zusammenwirken.

7. Schneckengetriebe nach Anspruch 6, dadurch gekennzeichnet, daß nur auf einer Seite jeder in dem Gehäuse (1) ausgebildeten Ausnehmung (22) ein Paar abgerundeter Schultern (23) vorgesehen ist.

8. Schneckengetriebe nach irgendeinem vorhergehenden Anspruch, dadurch gekennzeichnet, daß die seitliche Öffnung (8) im Querschnitt im wesentlichen rechteckig oder quadratisch ist.

9. Schneckengetriebe nach einem der Ansprüche 4 bis 6, dadurch gekennzeichnet, daß die Ausnehmung von oben betrachtet oval und von gleicher Form ist wie der Körper der Lagerbuchse.

10. Schneckengetriebe nach Anspruch 8, dadurch gekennzeichnet, daß eine Öldichtung an der Schneckenwelle (4) angebracht ist und in der seitlichen Öffnung (8) aufgenommen ist, um mit dieser einen öldichten Abschluß zu bilden.

11. Schneckengetriebe nach irgendeinem vorhergehenden Anspruch, dadurch gekennzeichnet, daß das Getrieberad (3) ein Viertelkreis-Sektor mit Zähnen an seinem bogenförmigen Umfang ist.

12. Einstückiges Gehäuse für ein Schneckengetriebe nach Anspruch 1, dadurch gekennzeichnet, daß jede Lageranordnung (5) in einer Höhlung in dem Gehäuse (1) aufgenommen ist, die nur in einer Richtung in dieses gefräst worden ist, um die Lageranordnungen (5) darin aufzunehmen und zu halten.

## Revendications

1. Boîtier d'engrenage à vis sans fin comprenant un carter (1) fermé par un couvercle (2), le carter contenant une roue dentée (3) montée à l'intérieur pour tourner autour d'un premier axe, un arbre de vis sans fin (4) portant une vis sans fin (9) s'engrenant avec la roue dentée (3) et monté dans des paliers (5) pour tourner autour d'un deuxième axe perpendiculaire au premier axe et ayant une partie dépassant d'un côté du carter par une ouverture latérale (8) pratiquée dans le carter, chaque palier (5) comprenant une bague qui est entièrement logée dans le carter et y est positionnée de telle sorte que toutes les charges radiales et axiales de l'arbre de vis soient portées par le carter, caractérisé en ce que chaque palier (5) est réalisé en métal fritté et retenu de manière fixe dans le carter (1) par son engagement direct par le couvercle (2), le couvercle faisant partie du carter (1).

2. Boîtier d'engrenage à vis sans fin selon la revendication 1 caractérisé en ce que l'ouverture latérale (8) est formée de manière à permettre l'introduction dans le carter (1) d'un sous-ensemble comprenant l'arbre de vis (4) avec les paliers (5) montés dessus, dans une direction perpendiculaire à l'axe de rotation de l'arbre de vis (4).

3. Boîtier d'engrenage à vis sans fin selon la revendication 1 ou la revendication 2 caractérisé en ce que chaque bague de palier (5) est entièrement logée dans une cavité de palier respective dans le carter (1).

4. Boîtier d'engrenage à vis sans fin selon la revendication 3 caractérisé en ce que le carter possède une base dans laquelle est formée une rainure (22) prévue pour recevoir et positionner une extrémité (21) de la bague de palier (5).

5. Boîtier d'engrenage à vis sans fin selon la revendication 4 caractérisé en ce que la bague de palier (5) comprend un corps dans lequel est prévue une ouverture pour recevoir l'arbre de vis (4), ledit corps ayant des extrémités arrondies (20) et un fond plat qui se loge dans ladite rainure (22) formée dans la base et est positionné par elle.

6. Boîtier d'engrenage à vis sans fin selon la revendication 5 caractérisé en ce que le carter (1) comprend des épaulements arrondis (23) qui coopèrent avec les extrémités arrondies (20) de chaque corps de bague de palier (5).

7. Boîtier d'engrenage à vis sans fin selon la revendication 6 caractérisé en ce qu'une paire d'épaulements arrondis (23) sont prévus d'un côté seulement de chaque rainure (22) formée dans le carter (1).

8. Boîtier d'engrenage à vis sans fin selon l'une quelconque des revendications précédentes caractérisé en ce que l'ouverture latérale (8) est de section essentiellement carrée.

9. Boîtier d'engrenage à vis sans fin selon l'une quelconque des revendications 4-6 caractérisé en ce que la rainure est ovale vue en plan et de la même forme que le corps de la bague de palier.

10. Boîtier d'engrenage à vis sans fin selon la revendication 8 caractérisé en ce qu'un joint d'étanchéité à l'huile est monté sur l'arbre de vis (4) et logé dans ladite ouverture latérale (8) pour constituer avec elle un joint étanche à l'huile.

11. Boîtier d'engrenage à vis sans fin selon l'une quelconque des revendications précédentes caractérisé en ce que la roue dentée (3) est un secteur muni de dents le long de son périmètre courbe.

12. Carter monobloc pour un boîtier d'engrenage à vis sans fin selon la revendication 1 caractérisé en ce que chaque palier (5) est logé dans une cavité usinée dans le carter (1) dans une direction seulement pour y recevoir et positionner les paliers (5).
